# EUROPÄISCHE PATENTSCHRIFT

(11) **EP 2 283 593 B1**
(45) Veröffentlichungstag und Bekanntmachung des Hinweises auf die Patenterteilung: **27.11.2013**
(21) Anmeldenummer: 09735880.8
(22) Anmeldetag: 08.04.2009
(51) Int. Cl.: H04B 10/90

(54) **DRAHTLOSE DATENÜBERTRAGUNG MIT TERAHERTZ-WELLEN**
WIRELESS DATA TRANSMISSION BY WAY OF TERAHERTZ WAVES
TRANSMISSION DE DONNÉES SANS FIL PAR ONDES TÉRAHERTZIENNES

(30) Priorität: 23.04.2008 DE 102008020466
(43) Veröffentlichungstag der Anmeldung: 16.02.2011
(73) Patentinhaber: Deutsche Telekom AG, 53113 Bonn (DE)
(72) Erfinder: MICHAELS, Ralph, 51427 Bergisch Gladbach (DE); EINSIEDLER, Hans, Joachim, 13189 Berlin (DE); MOERSDORF, Thomas, 61449 Steinbach i. Ts. (DE); KADEL, Gerhard, 64293 Darmstadt (DE); KRAUS, Josef, 64807 Dieburg (DE); MILCZEWSKY, Klaus, 64342 Seeheim-Jugenheim (DE); NEUMANN, Michael, 10777 Berlin (DE); BUSE, Karsten, 53115 Bonn (DE); BREUNIG, Ingo, 53123 Bonn (DE); SOWADE, Rosita, 53123 Bonn (DE); KIESSLING, Jens, 53115 Bonn (DE); KNABE, Bastian, 53115 Bonn (DE)
(74) Vertreter: Braun-Dullaeus, Karl-Ulrich
(86) Internationale Anmeldenummer: PCT/DE2009/000489
(87) Internationale Veröffentlichungsnummer: WO 2009/129772

(56) Entgegenhaltungen:
- US-A1- 2007 031 151
- US-B1- 6 816 112
- US-B1- 7 054 339
- STADLER B ET AL: "Terahertz operational reachback (THOR) a mobile free space optical network technology program" AEROSPACE CONFERENCE, 2004. PROCEEDINGS. 2004 IEEE, IEEE, PISCATAWAY, NJ, USA, 6. März 2004 (2004-03-06), Seiten 1710-1721, XP010748290 ISBN: 978-0-7803-8155-1
- JUAN C JUAREZ ET AL: "Free-Space Optical Communications for Next-generation Military Networks" IEEE COMMUNICATIONS MAGAZINE, IEEE SERVICE CENTER, PISCATAWAY, US, Bd. 44, Nr. 11, 1. November 2006 (2006-11-01), Seiten 46-51, XP011143573 ISSN: 0163-6804
- NICHOLS R: "Protocol Adaptation in Hybrid RF/Optical Wireless Networks" MILITARY COMMUNICATIONS CONFERENCE, 2005. MILCOM 2005. IEEE ATLANTIC CITY, NJ, USA 17-20 OCT. 2005, PISCATAWAY, NJ, USA,IEEE, PISCATAWAY, NJ, USA, 17. Oktober 2005 (2005-10-17), Seiten 1-7, XP010901554 ISBN: 978-0-7803-9393-6

## Beschreibung

Die Erfindung betrifft ein Verfahren zur drahtlosen Datenübertragung zwischen einem Sendemittel und einem Empfangsmittel, wobei die Daten als Signale auf eine elektromagnetische Trägerwelle im Frequenzbereich zwischen 0.1 und 10 Terahertz moduliert sind. Die Erfindung betrifft auch ein System zur Umsetzung des Verfahrens.

Seitdem vor etwa 100 Jahren erste Techniken zur drahtlose Datenübertragung eingesetzt wurden, stieg die für die Übertragung zur Verfügung stehende Bandbreite kontinuierlich. Dabei ist die Breite des zur Übertragung nutzbaren Frequenzbandes bekanntermaßen von der Trägerfrequenz abhängig, so dass gilt: Je höher die Trägerfrequenz, desto großer sind die zur Verfügung stehenden Übertragungsbandbreiten. Heutzutage werden Trägerfrequenzen im Bereich zwischen einigen Kilohertz bis hin zu vielen Gigahertz eingesetzt. So arbeitet beispielsweise das sogenannte "Wireless HD" mit einer Trägerfrequenz von 60 GHz und Bandbreiten von 4 Gbit/s. Um Datenraten im Bereich 10 Gbit/s und höher erreichen zu können, werden zukünftig auch Wellen im Terahertzbereich als Träger genutzt.

Die ersten Versuche zur Datenübertragung mit Terahertzwellen wurden mit gepulsten Sendern, die sich Femtosekunden-Laser bedienten, durchgeführt. Für die breitbandige Datenübertragungen sind jedoch Dauerstrichquellen, also kontinuierlich arbeitende Quellen für Teraherzstrahlung, nötig. Solche THz-Dauerstrichquellen lassen sich beispielsweise aus zwei aufeinander stabilisierten unabhängigen Lasern aufbauen. Andere THz-Dauerstrichquellen nutzen Zwei-Farben-Diodenlaser, die gleichzeitig zwei räumlich überlagerte Wellen mit einem spektralen Abstand im THz-Bereich emittieren. Trotz aller Bemühungen ist die Erzeugung von Terahertzwellen jedoch auch heute noch aufwendig und teuer, so dass es das Ziel ist, die begrenzt zur Verfügung stehende Dauerstrich-Terahertzleistung möglichst effizient zur Datenübertragung einzusetzen. Zudem ist anzumerken, dass Terahertzwellen in Luft einer starken Dämpfung unterliegen und die Strahlung selbst in den für die Terahertzwellen recht gut durchlässigen spektralen Fenstern schon auf Distanzen von einigen Metern merklich abgeschwächt werden.

Aus der US 2007/0031151 A1 ist ein Verfahren und eine Anordung zur Datenübertragung mittels Laserstrahlen bekannt. Zum Ausrichten des Laserstrahls auf ein beweglichen Empfänger werden in einem separaten Kommnikationskanal Positionsdaten zwischen dem Sender und dem Empfänger ausgetauscht.

Aufgabe der Erfindung ist es nunmehr, ein Verfahren zu schaffen, das die Datenübertragung auf der Basis von Terahertzwellen bei geringem Aufwand mit hoher Effektivität ermöglicht. Zudem ist es Aufgabe der Erfindung, ein einfach aufgebautes System zur Umsetzung des Verfahrens zu schaffen.

Diese Aufgaben werden durch das Verfahren mit den kennzeichnenden Merkmalen des Anspruchs 1 und das System nach Anspruch 5. Vorteilhafte Ausgestaltungen der Erfindung sind in den jeweiligen Unteransprüchen genannt.

Der wesentliche Grundgedanke der Erfindung liegt zum einen in der Erzeugung einer gebündelten Trägerwelle und zum anderen in der Ausrichtung der Sendemittel auf das Empfangsmittel, wobei diese Ausrichtung im Hinblick auf die reibungslose Kommunikation zwischen diesen Einheiten so zu optimieren ist, dass möglichst große Übertragungsstrecken erreicht werden. Dazu wird das Sendemittel mittels eines sich automatisch einstellenden Justiersystems auf das Empfangsmittel ausgerichtet. Dazu bedient sich das Justiersystem einer drahtlosen Kommunikation zwischen den Einheiten, deren Frequenz außerhalb des Teraherzbereichs liegt und sich insbesondere herkömmlicher Funkkanäle, beispielsweise Bluetooth oder WLAN, bedient. In einer anderen Ausführungsform der Erfindung wird ein Empfangsgerät genutzt, dessen Empfangsmittel, insbesondere Teraherzsstrahlung leitende Fasern, aus unterschiedlichen Richtungen kommende gerichtete Terahertzstrahlung empfangen kann. In dieser Ausführungsform ist es somit der Empfänger, der auf das Sendemittel ausgerichtet wird. Besonders vorteilhaft ist es natürlich, wenn ein System aus Sende- und Empfangsmitteln beide Optionen realisiert, so dass sich der Sender automatisch auf den Empfänger ausrichtet, wobei der Empfänger selber eine Richtungsoptimierung zulässt.

Da auch im Fall von Terahertzwellen die am Empfänger zur Verfügung stehende Empfangsleistung mit zunehmender Distanz zwischen Sender und Empfänger abnimmt, haben die erfindungsgemäß "gerichteten Wellen", bei denen die gesendete Leistung in eine bestimmte Richtung gebündelt wird, eine höhere Reichweite, als wenn sich die Wellen isotrop in alle Raumrichtungen ausbreiten können. Ein solcher Richtfunk im Sinne einer Punkt-zu-Punkt-Kommunikation ist im vorliegenden Fall der Terahertzwellen vorteilhaft, da nicht - wie von der Femseh- und Rundfunkübertragung bekannt - zeitgleich viele Empfänger mit demselben Signal versorgt werden müssen, also keine Versorgung einer großen Fläche notwendig ist. Die hier angestrebte Datenübertragung zwischen Sender und Empfänger führt wegen des gerichteten Signals zu den größt möglichen Übertragungsstrecken.

Werden die zur Datenübertragung eingesetzten Terahertzwellen mittels optischer Verfahren, beispielsweise durch Differenzfrequenzmischung von zwei Wellen mit Frequenzen im optischen Spektralbereich, erzeugt, so kann der Öffnungswinkel dieses Terahertzstrahls auf besonders einfache Weise mittels Linsen variiert werden. Dieser Strahl kann im Sinne der Erfindung direkt auf den Empfänger gerichtet werden.

Dabei ist es im Sinne einer effektiven Datenübertragung von Vorteil, wenn zwischen Sender und Empfänger eine direkte "Sichtverbindung" besteht. Das lässt sich beispielsweise dadurch realisieren, dass das Terahertz-Sendemittel an der Decke eines Raums angebracht ist und somit unmittelbaren Sichtkontakt zu nahezu jedem Arbeitspunkt im Raum hat. Ist der unmittelbare Sichtkontakt nicht zu jedem beliebigen Punkt im Raum gegeben, so kann die Terahertzwelle auch mehrfach zwischen dem Sender und dem Empfänger reflektiert werden, z. B. an den Wänden eines Raums. Insbesondere kann die Richtung des von einem Sender emittierten Strahls mit einem oder mehreren justierbaren Spiegeln eingestellt werden. Die Verteilung des Terahertzlichts auf mehrere unabhängige Spiegel erlaubt auch bei Verwendung nur einer Grundfrequenz die Adressierung mehrerer unabhängiger Empfänger, wobei es von Vorteil ist, wenn diese räumlich hinreichend weit getrennt sind. Als Spiegel lassen sich für diesen Zweck Lasergalvanometer einsetzen. Zudem sind Mikrospiegel, sogenannte MEMS ("micro-electro-mechanical systems") bekannt, die von besonderer Flexibilität sind und als Matrix gefertigt werden können. Zudem sind vielfältige andere Ablenk-oder Beugungsmöglichkeiten für Terahertzwellen, wie Prismen und Gitter, verfügbar und für diese Zwecke einsetzbar.

Um die erfindungsgemäße Justierung zu ermöglichen, ist es vorteilhaft, wenn das Sendemittel Information erhält, in welche Richtung es das Terahertz-Licht schicken soll. Zu diesem Zwecke kann zunächst auf der Basis "konventioneller" Funktechnik eine Verbindung zwischen den Sende- und Empfangsmittel aufgebaut werden, bevor über diesen Weg die Installation der Terahertz-Verbindung eingerichtet wird. Dabei reicht es aus, wenn die "konventionelle" Funkverbindung eine geringe Bandbreite in der Größenordnung einiger kbit/s aufweist. Im Rahmen dieser Verbindung kann eine Bestimmung der relativen Position der Komponenten stattfinden.

Zudem kann die am Empfänger ankommende Signalstärke optimiert werden, indem die Spiegelstellung oder die Orientierung des Empfängers verändert wird. Über den konventionellen Funkkanal meldet der Empfänger die Signalstärke an den Sender, der daraufhin die Senderichtung und optional den Öffnungswinkel der Strahlung optimiert.

Diese erfindungsgemäße Vorgehensweise, die sich im wesentlichen des unidirektionalen Datenaustausches bedient, ist besonders vorteilhaft für Anwendungen wie IP-TV oder das Herunterladen von Musik und Videos. Schließlich kommt es dabei mehr auf das Empfangen als auf das Senden großer Datenmengen an.

Für besondere Anwendungen ist es vorteilhaft, Terahertzlicht bidirektional einzusetzen. Zu diesem Zweck können die Komponenten in einer besonders einfachen Ausführungsform verdoppelt werden. Da Terahertz-Quellen jedoch recht aufwendig und teuer sind, kann es von Vorteil sein, die gleiche Quelle zum Senden und Empfangen zu nutzen. Dabei kann das Empfangsmittel die Terahertzquelle zur Demodulation des empfangenen Signals einsetzen. Dabei sind zwei Betriebsmodi möglich, nämlich das gleichzeitige Senden und Empfangen oder das wechselseitige Senden und Empfangen, wie es beispielsweise bei Wechselsprechanlagen der Fall ist.

Ganz generell ist die Abhörsicherheit ein großer Vorteil der gerichteten Datenkommunikation. So ist es bei einer solchen gerichteten Verbindung kaum möglich, dass fremde Nutzer an die übermittelten Daten gelangen. Zusammen mit der Eigenschaft, dass Terahertzwellen nicht sehr weit reichen und in der Regel Wände nicht durchdringen, stellt dieses einen ganz erheblichen Fortschritt im Vergleich beispielsweise zur heute bekannten Übertragung mittels WLAN dar.

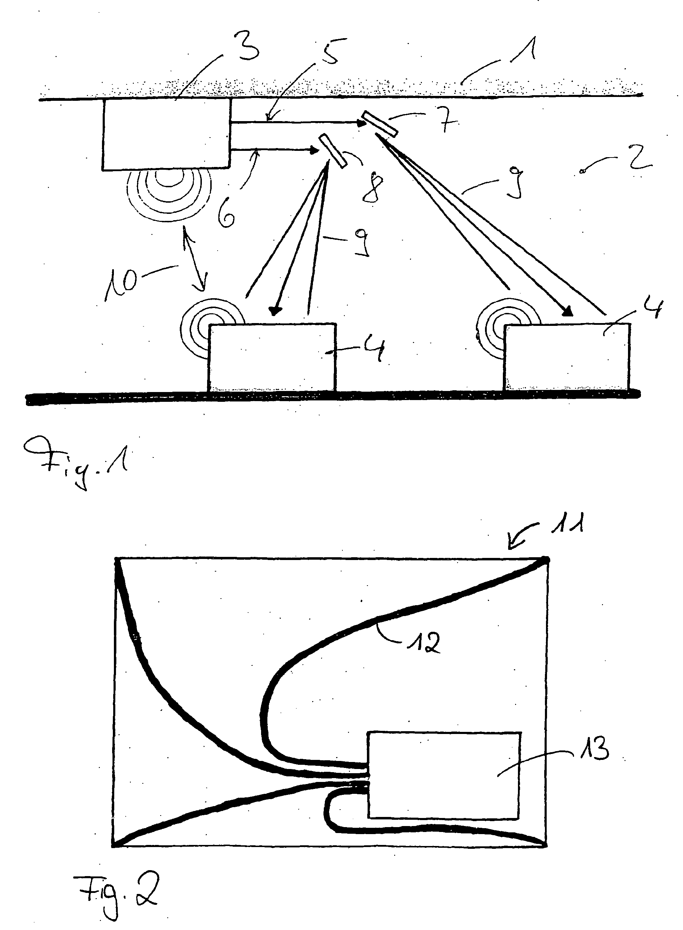

Das erfindungsgemäße Verfahren wird nachfolgend anhand der Figuren 1 und 2 erläutert. Es zeigen
- **Figur 1**: ein System zur Durchführung des Verfahrens und
- **Figur 2**: ein Empfangsmittel.

In Figur 1 ist das erfindungsgemäße Verfahren dargestellt. In diesem Fall bedient ein an der Decke 1 eines Raumes 2 montiertes Sendemittel aufweisend einen Sender 3 zwei Empfänger 4. Der Sender 3 erzeugt eine Terahertz-Trägerwelle mit zwei Kanälen 5 und 6 und versieht diese Kanäle durch entsprechende Modulation mit Daten. Der Sender 3 emittiert die beiden Kanäle 5 und 6 in Richtung zweier ebenfalls stationär an der Decke aufgehängter durch Drehen und Kippen ausrichtbarer Spiegel 7 und 8, die Teil des Sendemittels sind. Dabei können Spiegel zur Reflexion der Terahertz-Wellen genutzt werden, die auf dem Prinzip der dielektrischen Spiegel basieren. Auch können Reflektoren verwendet werden, die aus mehreren Polypropylen- und Siliziumschichten bestehen. Mit den Spiegeln 7 und 8 werden Sendekeulen 9 auf die Empfänger 4 ausgerichtet.

Zum Zweck der Optimierung der Spiegelstellung mittels des Justiersystems findet erfindungsgemäß eine Kommunikation zwischen dem Sendemittel und den Empfängern 4 statt. Dazu kommunizieren die Empfänger 4 mittels einer konventionellen Funkverbindung 10 mit dem Sender 3. Zur Optimierung der Stärke des Terahertzsignals wird die Ausrichtung der Spiegel 7 und 8 verändert. Die Mittel zur Einstellung der Spiegel und die zur Kommunikation sind Teil des automatisch arbeitenden Justiersystems.

Die Funkverbindung 10 kann auch verwendet werden, um die Sendeleistung zu optimieren, also diese bei guter Verbindung zu senken oder bei schlechter Verbindung zu erhöhen. Das ist besonders vorteilhaft, wenn, wie beispielsweise beim Herunterladen von Daten aus einem bewegten Empfänger, nur wenig Zeit zum Datenaustausch zur Verfügung steht. Auf diese Weise können in einer Art "Burst-Modus" Geräte innerhalb kurzer Zeit beladen werden. Das weiter reichende und unkompliziert zu handhabende Funksignal kann die Datenübertragung mit dem Terahertzlicht ankündigen und vorbereiten. Dabei kann der Sender 3 auch für kurze Zeit oberhalb seiner Leistungsspezifikationen betrieben werden, wenn deutlich ist, dass dieses nicht dauerhaft erforderlich ist und der Sender 3 daher nicht zerstört wird. Damit lassen sich dann in Situationen, bei denen Geräte innerhalb kurzer Zeit mit Daten "betankt" werden müssen, die Reichweiten erhöhen.

Da übliche Empfänger, wie Photomischer oder nichtlinear-optische Elemente, eine richtungsabhängige Empfindlichkeit aufweisen, kann es vorteilhaft sein, auch seitens des Empfängers eine entsprechende Ausrichtung auf den eingehenden Strahl durchzuführen. Auch hier kann ein am Empfänger angebrachter beweglicher Spiegel dafür sorgen, dass die Teraherzstrahlung optimal auf den Empfänger gelenkt wird. Alternativ könnten auch Fasern verwendet werden, um Terahertzwellen aus verschiedenen Richtungen aufzunehmen und dann gerichtet auf einen im Empfängerbeauteil vorhandenen Detektor zu lenken.

Figur 2 zeigt schematisch ein solches Empfängerbeauteil mit integrierten Fasern. Dabei sind in dem Gerät 11, das ein Mobiltelefon oder ein portabler Computer sein kann, Fasern 12 zur Leitung von Terahertzlicht angeordnet. Für die Herstellung solcher Fasern sind eine Reihe von Polymeren geeignet. Die Fasern 12 sind so angeordnet, dass sie an unterschiedlichen Ecken des Gehäuses nach außen weisen. In dem Ausführungsbeispiel nach der Abbildung sind exemplarisch vier Fasern 12 eingezeichnet, wobei deren Anzahl erheblich höher sein kann.

Zudem kann es vorteilhaft sein, wenn vor den nach außen ragenden Enden der Fasern jeweils noch eine optische Komponente, beispielsweise eine Linse, installiert wird, um die einkommende Terahertzwelle zu bündeln. Die Fasern leiten das THz-Signal dann zum eigentlichen Detektor 13 weiter und senden es dort parallel so aus, dass der Detektor es auch bei einem Detektionsverfahren nachweisen kann, welches es erfordert, dass die Terahertzwelle innerhalb eines gewissen Winkelbereichs auf den eigentlichen Detektor trifft.

## Patentansprüche

1. Verfahren zur drahtlosen Datenübertragung zwischen einem Sendemittel (3,7,8) und einem Empfangsmittel (4),
wobei
eine vom Sendemittel (3,7,8) ausgesandte Trägerwelle in Richtung des Empfangsmittels (4) gebündelt wird, wobei das Sendemittel (3,7,8) mittels eines automatischen Justiersystems auf das Empfangsmittel (4) ausgerichtet wird und wobei sich das Justiersystem zur Ausrichtung einer drahtlosen Kommunikation zwischen Sender (3,7,8) und Empfänger (4) bedient, **dadurch gekennzeichnet, dass** die Daten als Signale auf eine elektromagnetische Trägerwelle im Frequenzbereich zwischen 0.1 und 10 Terahertz moduliert sind.

2. Verfahren nach Anspruch 1,
**dadurch gekennzeichnet,**
**dass** die zur Datenübertragung eingesetzten Terahertzwellen mittels optischer Verfahren, insbesondere durch Differenzfrequenzmischung zweier Wellen mit Frequenzen im optischen Spektralbereich, erzeugt werden.

3. Verfahren nach Anspruch 1 oder 2,
**dadurch gekennzeichnet,**
**dass** Sendemittel (3,7,8) und Empfangsmittel (4) so angeordnet werden, dass eine unmittelbare "Sichtverbindung" besteht, wobei die Sichtverbindung insbesondere zwischen dem Sendemittel (3,7,8) und/oder dem Empfangsmittel (4) zuzuordnenden Spiegeln (7,8) besteht.

4. Verfahren nach einem der vorherigen Ansprüche,
**dadurch gekennzeichnet,**
**dass** für das automatische Ausrichten ein drahtloses Kommunikationssystem (10) genutzt wird, das die Verbindung zwischen Sendemittel (3,7,8) und Empfangsmittel (4) anmeldet und Informationen zur optimalen Senderichtung der Trägerwelle austauscht.

5. System eingerichtet zur Umsetzung des Verfahrens nach einem der vorherigen Ansprüche,
**gekennzeichnet durch**
ein Sendemittel (3,7,8), ein Empfangsmittel (4), ein Justiersystem zur automatischen Ausrichtung des Sendemittels (3,7,8) auf das Empfangsmittel (4) und ein drahtloses Kommunikationssystem (10) zur Unterstützung des Justiersystems.

6. System nach Anspruch 5,
**dadurch gekennzeichnet,**
**dass** das Sendemittel (3,7,8) bewegliche und über das Justiersystem gesteuerte Spiegel (7,8) aufweist, um die Trägerwelle auf das Empfangsmittel auszurichten.

7. System nach Anspruch 5 oder 6,
**dadurch gekennzeichnet,**
**dass** das Sendemittel (3,7,8) elektrisch oder mit Licht kontrollierte Beugungselemente aufweist, um die Trägerwelle auf den Empfänger auszurichten.

8. System nach einem der Ansprüche 5 bis 7,
**gekennzeichnet durch**
ein Messsystem zur relativen Positionsbestimmung zwischen Sende- und Empfangsmitteln.

## Claims

1. Method for the wireless data transmission between a sending means (3,7,8) and a receiving means (4),
wherein a carrier wave sent by the sending means (3,7,8) is bundled in the direction of the receiving means (4), wherein the sending means (3,7,8) is aligned with the receiving means (4) by means of an automatic adjustment system and wherein the adjustment system uses, for aligning, the service of a wireless communication between the sending means (3,7,8) and the receiving means (4),
**characterized in**
**that** the data are modulated onto an electromagnetic carrier wave in the frequency range between 0,1 and 10 terahertz.

2. Method according claim 1
**characterized in**
**that** the terahertz-waves, which are employed for the data transmission, are generated by an optical method, in particular by difference frequency mixing of two waves having frequencies in the optical spectrum.

3. Method according claim 1 or 2,
**characterized in**
**that** the sending means (3,7,8) and the receiving means (4) are arranged in a manner, that an immediate "line of sight" is given, wherein the line of sight exists in particular between reflectors (7,8), which are referable to the sending means (3,7,8) and/or the receiving means (4).

4. Method according to any of the preceding claims,
**characterized in**
**that** a wireless communication system (10) is used for the automatic alignment, which registers the connection between the sending means (3,7,8) and the receiving means (4) and exchanges information for the optimal sending direction of the carrier wave.

5. System configured for the implementation of the method according to any of the preceding claims,
**characterized by**
a sending means (3,7,8), a receiving means (4), an adjustment system for the automatic alignment of the sending means (3,7,8) with the receiving means (4) and a wireless communication system (10) for supporting the adjustment system.

6. System according claim 5,
**characterized in**
**that** the sending means (3,7,8) comprises reflectors (7,9), which are movable and controllable via the adjustment system, for aligning the carrier wave with the receiving means.

7. System according claim 5 or 6,
**characterized in**
**that** the sending means (3,7,8) comprises flection elements, controlled electrically or optically by light, for aligning the carrier wave with the receiving means.

8. System according to any of claims 5 to 7,
**characterized by**
a measuring system for the relative determination of position between the sending and receiving means.

## Revendications

1. Procédé pour la transmission de données sans fil entre un moyen d'émission (3, 7, 8) et un moyen de réception (4),
une onde porteuse émise par le moyen d'émission (3, 7, 8) étant focalisée en direction du moyen de réception (4), le moyen d'émission (3, 7, 8) étant orienté à l'aide d'un système d'ajustement automatique vers le moyen de réception (4) et le système d'ajustement étant utilisé pour l'orientation d'une communication sans fil entre l'émetteur (3, 7, 8) et le récepteur (4),
**caractérisé en ce que** les données sont modulées en tant que signaux sur une onde porteuse électromagnétique dans la plage des fréquences comprise entre 0,1 et 10 térahertz.

2. Procédé selon la revendication 1, **caractérisé en ce que** les ondes térahertziennes utilisées pour la transmission de données sont générées à l'aide de procédés optiques, en particulier par mélange de fréquences différentielles de deux ondes avec des fréquences dans la plage spectrale optique.

3. Procédé selon la revendication 1 ou 2,
**caractérisé en ce que** le moyen d'émission (3, 7, 8) et le moyen de réception (4) sont disposés de manière à ce qu'il y ait une « liaison visuelle » directe, la liaison visuelle existant en particulier entre des miroirs (7, 8) à associer au moyen d'émission (3, 7, 8) et/ou au moyen de réception (4).

4. Procédé selon l'une des revendications précédentes,
**caractérisé en ce que** l'on utilise un système de communication sans fil (10) pour l'orientation automatique, lequel annonce la liaison entre le moyen d'émission (3, 7, 8) et le moyen de réception (4) et échange des informations pour la direction d'émission optimale de l'onde porteuse.

5. Système étudié pour la mise en oeuvre du procédé selon l'une des revendications précédentes,
**caractérisé par** un moyen d'émission (3, 7, 8), un moyen de réception (4), un système d'ajustement pour l'orientation automatique du moyen d'émission (3, 7, 8) vers le moyen de réception (4) et un système de communication sans fil (10) pour le support du système d'ajustement.

6. Système selon la revendication 5, **caractérisé en ce que** le moyen d'émission (3, 7, 8) présente des miroirs (7, 8) mobiles et commandés par l'intermédiaire du système d'ajustement afin d'orienter l'onde porteuse vers le moyen de réception.

7. Système selon la revendication 5 ou 6, **caractérisé en ce que** le moyen d'émission (3, 7, 8) présente des éléments de flexion contrôlés électriquement ou avec de la lumière afin d'orienter l'onde porteuse vers le récepteur.

8. Système selon l'une des revendications 5 à 7, **caractérisé par** un système de mesure pour la détermination de la position relative entre les moyens d'émission et de réception.
